# EUROPÄISCHE PATENTSCHRIFT

(11) **EP 2 822 813 B1**
(45) Veröffentlichungstag und Bekanntmachung des Hinweises auf die Patenterteilung: **14.09.2016**
(21) Anmeldenummer: 13705095.1
(22) Anmeldetag: 16.01.2013
(51) Int. Cl.: B60R 1/06, B60R 1/12

(54) **KRAFTFAHRZEUG MIT EINEM ELEKTRONISCHEN RÜCKSPIEGEL**
VEHICLE WITH AN ELECTRONIC REAR VIEW MIRROR
VÉHICULE AVEC UN RÉTROVISEUR ÉLECTRONIQUE

(30) Priorität: 07.03.2012 DE 102012004639
(43) Veröffentlichungstag der Anmeldung: 14.01.2015
(73) Patentinhaber: Audi AG, 85045 Ingolstadt (DE)
(72) Erfinder: HEINEMANN, Patrick, 85092 Kösching (DE)
(74) Vertreter: Schuster, Simon
(86) Internationale Anmeldenummer: PCT/EP2013/000113
(87) Internationale Veröffentlichungsnummer: WO 2013/131598

(56) Entgegenhaltungen:
- WO-A1-2009/044654
- WO-A1-2011/014903
- DE-A1-102007 044 536
- FR-A1- 2 913 798

## Beschreibung

Die Erfindung betrifft ein Kraftfahrzeug, umfassend wenigstens einen elektronischen Rückspiegel, insbesondere einen Außen- und/oder Seitenspiegel, der eine Anzeigevorrichtung, insbesondere ein Display, für von einer insbesondere außerhalb des Kraftfahrzeugs vorgesehenen Außenkamera aufgenommene Bilder aufweist.

Im Stand der Technik wurden elektronische Rückspiegel, insbesondere elektronische Außenspiegel und/oder Seitenspiegel, bereits vorgeschlagen. Bei dieser Art von Außenspiegeln ist ein virtueller Spiegel vorgesehen, das bedeutet, statt einer Spiegelfläche wird eine Anzeigevorrichtung, insbesondere ein Display, verwendet, die Daten, die von einer insbesondere im Außenspiegel selbst angeordneten Außenkamera aufgenommen werden, darstellt. Allerdings sind auch Ausgestaltungen bekannt, bei denen die Anzeigevorrichtung im Innenraum des Kraftfahrzeugs, beispielsweise im Bereich der A-Säule, angeordnet ist. Dabei sind allgemeine Systeme bekannt, bei denen für das auf der Anzeigevorrichtung dargestellte Bild ein fest definierter (Kamera-) Blickwinkel vorgesehen ist.

Jedoch wurden inzwischen auch Systeme vorgeschlagen, die beispielsweise eine Verstellung der Kamera erlauben. Dabei wird eine Schwenkeinrichtung verwendet, die es ermöglicht, eine Neigungs- beziehungsweise Winkelnachführung des Kamerasystems zu erlauben, um eine Spiegelnachstellung zu ersetzen.

In der nachveröffentlichten Patentanmeldung DE 10 2011 118 253.9 der Anmelderin wurde zudem vorgeschlagen, dass die Kamera einen größeren Bereich aufnimmt und nur ein durch einen Benutzer und/oder automatisch einstellbarer Bildausschnitt eines durch die Außenkamera aufgenommenen Bildes auf der Anzeigevorrichtung dargestellt wird. Dort wird also ein Bildausschnitt des größeren Kamerabildes angezeigt, der durch den Benutzer oder situationsabhängig ausgewählt werden kann.

Sowohl eine Verschwenkung der Kamera als auch eine Auswahl eines Bildausschnitts können also einen Fahrer die Möglichkeit geben, den im Spiegel dargestellten Blickwinkel zu verändern, sei es durch die mechanische Verschwenkung der Kamera oder durch die Auswahl eines bestimmten Bildausschnitts. Auch eine automatische Verstellung des Blickwinkels wurde bereits vorgeschlagen, wobei eine automatische Änderung in manchen Situationen eher unerwünscht sein kann. In diesen Situationen ist eine Fahrer-Interaktion nötig.

Dokument DE 10 2007 044536 A1 betrifft eine Vorrichtung zum Überwachen der Umgebung eines Kraftfahrzeugs, wobei beispielsweise als Kamera ausgebildete Kameramittel für die Aufnahme eines Bildstroms mit Bildern der Umgebung vorgesehen sind, und wobei wenigstens ein Bildausschnitt des Bildstroms auf einer Anzeigeeinheit im Fahrzeuginneren wiedergegeben wird. Der auf der Anzeigeeinheit dargestellte Umgebungsausschnitt wird selbsttätig verändert, wobei entsprechende Mittel vorgesehen sind. Diese berücksichtigen eine frühere Position des Kraftfahrzeugs. Es kann die Kamera verschwenkt oder der wiedergegebene Bildausschnitt angepasst werden.

Der Erfindung liegt daher die Aufgabe zugrunde, eine konkrete, vorteilhafte und für den Fahrer einfach verständliche Möglichkeit zur Einstellung eines Bildausschnitts und/oder einer Ausrichtung der Außenkamera anzugeben.

Zur Lösung dieser Aufgabe ist bei einem Kraftfahrzeug der eingangs genannten Art erfindungsgemäß vorgesehen, dass als Bedienelement zur Einstellung eines auf der Anzeigevorrichtung anzuzeigenden Bildausschnitts des Bildes und/oder einer Ausrichtung der Außenkamera ein zur Verstellung der Spiegelfläche eines konventionellen Außenspiegels entwickeltes Spiegelbedienelement und/oder ein Dreh-Drück-Steller einer Mensch-Maschine-Schnittstelle vorgesehen ist.

In einer ersten erfindungsgemäßen Möglichkeit kann also vorgesehen sein, ein herkömmliches Spiegelbedienelement, welches üblicherweise zur Verstellung einer Spiegelfläche bei einem konventionellen Außenspiegel eingesetzt wird, auch bei einem elektronischen Spiegel einzusetzen. Hierbei kann es sich beispielsweise um grundsätzlich bekannte Spiegelverstellknöpfe handeln, die bei Kraftfahrzeugen mit einem herkömmlichen, eine Spiegelfläche aufweisenden Außenspiegel durch Verschwenkung der Spiegelfläche an sich und/oder des gesamten Außenspiegels die Änderung der Ausrichtung der Spiegelfläche und mithin des in dem Außenspiegel einsehbaren Bereichs erlauben. Wird also ein bereits früher zu einer Verstellung an einem dort noch herkömmlichen Außenspiegel verwendetes Spiegelbedienelement eingesetzt, ist eine einfache und damit sichere und ablenkungsfreie Interaktionsmöglichkeit für den Fahrer gegeben, die darüber hinaus auch noch dem gewohnten Verstellen des konventionellen Spiegel entspricht.

In einer anderen, zusätzlich oder alternativ vorgesehenen Möglichkeit der vorliegenden Erfindung wird vorgeschlagen, zur Einstellung einen Dreh-Drück-Steller einer Mensch-Maschine-Schnittstelle zu verwenden. Derartige Dreh-Drück-Steller sind im Stand der Technik bereits weitgehend bekannt und werden häufig gemeinsam mit einem Display eingesetzt, um beispielsweise Menüpunkte auszuwählen und Einstellungen vorzunehmen. Sie weisen einen Dreh-Freiheitsgrad und einen Drück-Freiheitsgrad auf, kombinieren also beispielsweise ein Drehrad mit einem Knopf. Ein solcher Dreh-Drück-Steller soll erfindungsgemäß nun auch genutzt werden, um Einstellungen an einem elektronischen Rückspiegel, beispielsweise an einem Außenspiegel oder einem zentralen Innenrückspiegel, vorzunehmen. Beispielsweise kann hierzu vorgesehen sein, dass zunächst über die Mensch-Maschine-Schnittstelle der Spiegel als einzustellendes Element ausgewählt wird, wobei dann die konkrete Verstellung über den Dreh-Drück-Steller erfolgt. Der Benutzer findet also die Möglichkeit zur Einstellung seines elektronischen Rückspiegels an einer Stelle und auf eine Art, die ihm bereits von anderen Einstellungen bekannt ist, so dass auch hier eine besonders einfache und komfortable Möglichkeit realisiert ist, die Einstellung vorzunehmen.

In weiterer Ausgestaltung der vorliegenden Erfindung kann vorgesehen sein, dass bei zwei Außen- und/oder Seitenspiegeln, die als elektronische Rückspiegel ausgebildet sind, jedem ein Spiegelbedienelement zugeordnet ist oder ein Spiegelbedienelement für beide Außen- und/oder Seitenspiegel vorgesehen ist, wobei insbesondere durch Drehen des Spiegelbedienelements in eine einem Außen- und/oder Seitenspiegel zugeordnete Rastposition ein Spiegel wählbar ist. Derartige Spiegelbedienelemente, auch als Spiegelverstellknopf bekannt, wurden im Stand der Technik bereits für konventionelle Spiegel vorgeschlagen, um die Spiegelfläche geeignet einzustellen. Ein solches Spiegelbedienelement kann durch Drehen anwählbare Rastpositionen für jeden über es einzustellenden elektronischen Rückspiegel aufweisen, wobei zusätzlich eine Neutralposition vorgesehen sein kann, so dass bei versehentlichem Berühren des Spiegelbedienelements keine Verstellung auftritt. In der Neutral-Rastposition ist mithin kein Spiegel angewählt. Geht es um eine Einstellung elektronischer Außen- und/oder Seitenspiegel, kann beispielsweise eine zentrale Neutral-Rastposition von Rastpositionen für den linken und rechten Spiegel umgeben sein. Nach Anwahl einer einem Rückspiegel zugeordneten Rastposition kann beispielsweise vorgesehen sein, dass das Spiegelbedienelement in zwei insbesondere zueinander senkrechten linearen Bewegungsfreiheitsgraden bewegbar ist, so dass eine entsprechende Verkippung der Außenkamera beziehungsweise Verschiebung des Bildausschnitts angewählt werden kann.

Im Rahmen der vorliegenden Erfindung kann auch allgemein vorgesehen sein, dass das Spiegelbedienelement zwei insbesondere zueinander senkrechte lineare Bewegungsfreiheitsgrade aufweist, die einer Verkippung der Außenkamera und/oder einer Verschiebung des Bildausschnitts jeweils in einer entsprechenden Richtung zugeordnet sind. Dabei ist idealerweise eine im Wesentlichen in Fahrzeuglängsrichtung verlaufende Richtung einer Verschiebung des Bildausschnitts nach oben und unten beziehungsweise einer Verkippung der Kamera um eine horizontale Achse zugeordnet, während eine im Wesentlichen der Fahrzeugquerrichtung entsprechende Richtung einer Links-Rechts-Verschiebung des Bildausschnitts beziehungsweise einer Verkippung der Kamera um eine vertikale Achse zugeordnet ist.

Zur konkreten Ausgestaltung des Dreh-Drück-Stellers gibt es im Rahmen der vorliegenden Erfindung auch mehrere Möglichkeiten. So kann vorgesehen sein, dass der Dreh-Drück-Steller ein in wenigstens zwei Bewegungsrichtungen bewegbares, insbesondere zentral auf dem Dreh-Drück-Steller angeordnetes Einstellelement aufweist, dessen Bewegungsrichtungen wenigstens einer entsprechenden Richtung zur Verkippung der Außenkamera und/oder Verschiebung des Bildausschnitts zugeordnet sind. Dabei ist es beispielsweise denkbar, dass das Einstellelement als Joystick oder bewegbarer Knopf oder Trackball ausgebildet ist. Es kann also vorgesehen sein, dass auf dem Dreh-Drück-Steller zur Realisierung weiterer Freiheitsgrade ein weiteres Bedienelement integriert ist, insbesondere ein Joystick, ein bewegbarer Knopf oder ein Trackball. Dies ermöglicht es insbesondere, den Dreh-Freiheitsgrad des Dreh-Drück-Stellers einer weiteren Funktionalität zuzuordnen, insbesondere einem Zoom, woraufhin im Folgenden noch näher eingegangen werden wird.

Alternativ zu einem bewegbaren Einstellelement kann auch vorgesehen sein, dass auf dem Dreh-Drück-Steller als weiteres Einstellelement ein Touchpad vorgesehen ist, wobei sensierte Bewegungsrichtungen auf dem Touchpad wenigstens einer entsprechenden Richtung zur Verkippung der Außenkamera und/oder Verschiebung des Bildausschnitts zugeordnet sind. Beispielsweise kann also eine obere Oberfläche des Dreh-Drück-Stellers wenigstens teilweise als ein Touchpad ausgebildet sein, so dass beispielsweise durch darüber streichen mit dem Finger in einer bestimmten Richtung eine Richtung vorgegeben werden kann, in der dann auch ein Bildausschnitt verschoben wird und/oder die Kamera verkippt wird.

Auf die so beschriebenen Arten ist es möglich, die Einstellmöglichkeiten des Dreh-Drück-Stellers bei einem kompakten Gesamtdesign zu erweitern.

Dabei sei an dieser Stelle jedoch angemerkt, dass es grundsätzlich selbstverständlich auch denkbar ist, allein mit dem Dreh-Drück-Steller entsprechende Einstellungen bezüglich der Ausrichtung der Außenkamera beziehungsweise des Bildausschnitts vorzunehmen. Beispielsweise kann über die Mensch-Maschine-Schnittstelle, insbesondere mittels eines dargestellten Menüs, eine Richtung ausgewählt werden, in der die Verkippung oder Verschiebung erfolgen soll, worauf dann durch Drehen des Dreh-Drück-Stellers eine entsprechende Verschiebung in der Richtung bewirkt werden kann. Bevorzugt ist es im Rahmen der vorliegenden Erfindung jedoch, dass der Dreh-Drück-Steller um ein Einstellelement erweitert ist.

In diesem Fall ist es nämlich besonders vorteilhaft möglich, dass durch Drehen des Dreh-Drück-Stellers eine Vergrößerungsstufe der Kamera und/oder des Bildausschnitts wählbar ist. Die zusätzliche Möglichkeit, den Bildausschnitt zu vergrößern oder zu verkleinern beziehungsweise eine Vergrößerungsstufe der Kamera zu verstellen (zoomen), eröffnet mithin einen weiteren Freiheitsgrad, den der Fahrer dazu nutzen kann, bestimmte Bildinhalte genauer zu betrachten, beispielsweise die Felgen durch Vergrößerung beim Einparken. Auch ist es denkbar, dass er sozusagen "herauszoomt", um sich einen besseren Überblick zu verschaffen, indem das Blickfeld vergrößert wird. Vorteilhafterweise ist eine derartige Bedienung für einen Benutzer einfach zu lernen, denn Derartiges ist ihm beispielsweise bereits aus der Navigation bekannt, wo Kartenausschnitte verschoben und gezoomt werden können, indem der Dreh-Drück-Steller verwendet wird.

In weiterer Ausgestaltung der vorliegenden Erfindung kann vorgesehen sein, dass über die Mensch-Maschine-Schnittstelle, insbesondere mittels des Dreh-Drück-Stellers, einer von mehreren elektronischen Rückspiegeln auswählbar ist. Sind mithin mehrere elektronische Rückspiegel vorgesehen, kann eine Auswahl eines einzustellenden elektronischen Rückspiegels über die Mensch-Maschine-Schnittstelle erfolgen, wozu mit besonderem Vorteil auch der Dreh-Drück-Steller eingesetzt wird. So lässt sich der Dreh-Drück-Steiler zur Auswahl und Einstellung mehrerer elektronischer Rückspiegel nutzen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: eine mögliche Ausgestaltung eines Spiegelbedienelements,
- Fig. 3: eine erste mögliche Ausgestaltung eines Dreh-Drück-Stellers,
- Fig. 4: eine zweite mögliche Ausgestaltung eines Dreh-Drück-Stellers,
- Fig. 5: eine dritte mögliche Ausgestaltung eines Dreh-Drück-Stellers, und
- Fig. 6: eine vierte mögliche Ausgestaltung eines Dreh-Drück-Stellers.

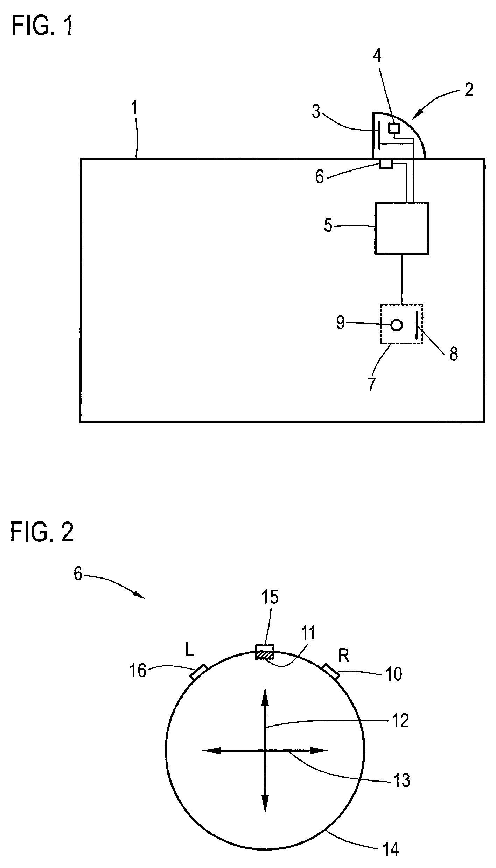

Fig. 1 zeigt eine Prinzipskizze eines erfindungsgemäßen Kraftfahrzeugs 1. Das Kraftfahrzeug 1 umfasst einen elektronischen Rückspiegel 2, hier einen elektronischen Außenspiegel beziehungsweise Seitenspiegel, wobei selbstverständlich auch ein zweiter elektronischer Außenspiegel 2 auf der anderen Seite des Kraftfahrzeugs 1 vorgesehen sein kann. Statt einer Spiegelfläche umfasst der Außenspiegel 2 eine Anzeigevorrichtung 3, hier ein Display. Neben oder oberhalb der Anzeigevorrichtung 3 ebenso in den Außenspiegel 2 integriert ist eine Außenkamera 4 vorgesehen, die einen gegen die Fahrtrichtung gerichteten, einen Teil des Fahrzeugumfelds umfassenden Erfassungsbereich aufweist und vorliegend mit einem Weitwinkelobjektiv ausgestattet ist, um möglichst weite Bereiche des Fahrzeugumfelds aufzunehmen. Der Betrieb des elektronischen Rückspiegels 2 wird durch ein Steuergerät 5 gesteuert.

Dabei ist im vorliegenden Ausführungsbeispiel vorgesehen, dass nur ein Bildausschnitt eines von der Außenkamera 4 aufgenommenen Gesamtbildes an der Anzeigevorrichtung 3 dargestellt wird. Die Außenkamera 4, welche im Übrigen auch als eine Infrarot-Kamera ausgebildet sein kann, umfasst vorliegend ein Weitwinkelobjektiv, um einen möglichst großen Bereich der Fahrzeugumgebung seitlich und hinter dem Kraftfahrzeug 1 aufnehmen zu können. Welcher Bildausschnitt konkret angezeigt wird, kann von dem Fahrer selbst über ein Spiegelbedienelement 6 oder an einer Mensch-Maschine-Schnittstelle 7 eingestellt werden, die vorliegend ein Display 8 und einen Dreh-Drück-Steller 9 umfasst.

Dabei sei an dieser Stelle bereits angemerkt, dass auch andere Ausgestaltungen eines erfindungsgemäßen Kraftfahrzeugs 1 grundsätzlich denkbar sind, beispielsweise im Hinblick auf eine innerhalb des Kraftfahrzeugs angeordnete Anzeigevorrichtung 3, einen zusätzlich als elektronischen Rückspiegel vorhandenen Innen-Rückspiegel und eine verschwenkbare Ausgestaltung der Außenkamera 4. Dabei wird allerdings ein verschiebbarer Bildausschnitt, wie er beschrieben wurde, gegenüber einer verschwenkbaren Kamera bevorzugt.

Bei dem Spiegelbedienelement 6 handelt es sich um ein Spiegelbedienelement, das zur Verkippung von Spiegelflächen in herkömmlichen Spiegeln entwickelt und für diese bereits verwendet wurde, so dass seitens des Fahrers hier keine Umgewöhnung notwendig ist. Das Spiegelbedienelement 6 ist zudem an einem Ort angeordnet, wo es der Fahrer zu finden gewohnt ist, im vorliegenden Ausführungsbeispiel im Bereich der Fahrertür.

Fig. 2 zeigt eine mögliche Ausgestaltung eines derartigen SpiegelBedienelements genauer, welches vorliegend zur Einstellung von zwei elektronischen Rückspiegeln 2, hier eines linken und eines rechten Außenspiegels, ausgebildet ist. Hierzu weist das Spiegelbedienelement 6, vgl. Fig. 2, zunächst einen drehbaren Knopf 14 auf, der durch drehen in drei verschiedene Rastpositionen verbracht werden kann. Eine Grundstellung, auch als Neutral-Rastposition 15 bezeichnet, ist zentral angeordnet und keinem elektronischen Außenspiegel zugeordnet.

Um die Neutral-Rastposition 15 sind zwei weitere Rastpositionen 16, 10 angeordnet, wobei die Rastposition 16 dem linken elektronischen Rückspiegel 2 und die Rastposition 10 dem rechten elektronischen Rückspiegel 2 zugeordnet ist. Eine Markierung 11 auf dem Knopf 14 zeigt für den Fahrer die aktuelle Raststellung an.

Der Knopf 14 weist neben seiner Drehbarkeit noch weitere Bewegungsfreiheitsgrade auf, vorwiegend eine Bewegbarkeit in zwei zueinander senkrechten Richtungen, Pfeil 12 und Pfeil 13. Ist eine einem elektronischen Rückspiegel 2 zugeordnete Rastposition 16, 10 eingenommen, hat eine Bewegung des Knopfes 14 entlang einer der Richtungen eine Verschiebung des Bildausschnitts in einer zugeordneten Richtung zur Folge. Dabei ist in diesem Fall die durch den Pfeil 12 beschriebene Richtung (vorne-hinten) eine Verschiebung des Bildausschnitts in der Richtung "oben - unten" zugeordnet, eine Auslenkung in der durch den Pfeil 13 angezeigten Richtung (links - rechts) hat eine Verschiebung des Bildausschnitts nach links oder rechts zur Folge.

Eine derartige Bedienung ist dem Fahrer von herkömmlichen, eine Spiegelfläche aufweisenden Spiegeln bekannt, um die Ausrichtung der Spiegelfläche zu ändern, so dass sie intuitiv und einfach erlernbar ist.

Doch ist im Rahmen der vorliegenden Erfindung auch eine Einstellung des Bildausschnitts über den Dreh-Drück-Steller 9 der Mensch-Maschine-Schnittstelle möglich. Dabei weist der Dreh-Drück-Steller 9 in allen hier dargestellten Ausführungsbeispielen ein weitere Freiheitsgrade, hier zwei Bewegungsfreiheitsgrade in zueinander senkrechten Richtungen, aufweisendes Einstellelement auf, so dass es ermöglicht wird, den Dreh-Freiheitsgrad des Dreh-Drück-Stellers 9 zum Verändern einer Vergrößerungsstufe des Bildausschnitts zu nutzen, mithin für eine Zoom-Funktion.

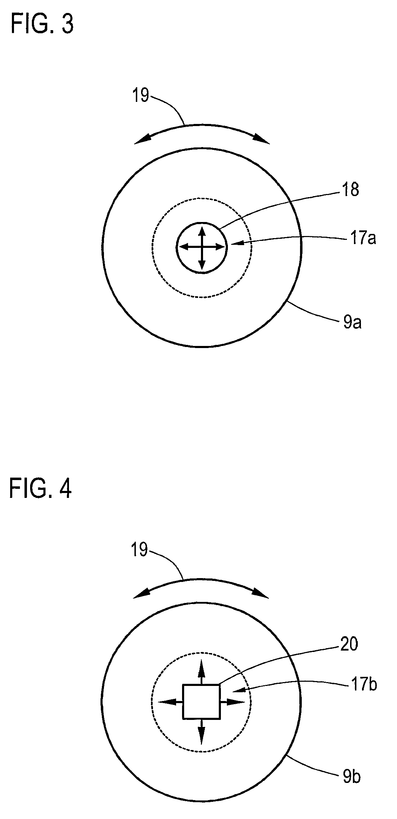

Die Figuren 3 - 6 zeigen nun verschiedene Ausgestaltungen eines solchen Dreh-Drück-Stellers 9 mit zusätzlichem Einstellelement 17.

Fig. 3 zeigt einen Dreh-Drück-Steller 9a, auf den zentral ein Joystick 18 als Einstellelement 17a angeordnet ist. Dieser ist, wie angedeutet, in zwei zueinander senkrechten Richtungen auslenkbar, um eine Verschiebung des Bildausschnitts zu ermöglichen. Über ihn kann mithin nach Auswahl eines elektronischen Rückspiegels 2 in einem Menü der Bildausschnitt in dem Kamerabild der Außenkamera 4 verschoben werden. Gleichzeitig ist es möglich, durch Drehen des Dreh-Drück-Stellers 9a, Pfeil 19, die Zoom-Stufe (Vergrößerungsstufe) zu wählen. Dies gilt im Übrigen auch für die nun noch zu diskutierenden Dreh-Drück-Steller 9b, 9c und 9d.

Im den in Fig. 4 dargestellten Dreh-Drück-Steller 9b ist zentral als Einstellelement 17b ein Knopf 20 vorgesehen, der ebenso in zwei zueinander senkrechten Richtungen bewegbar ist. Auch hier sind die Richtungen Verschiebungsrichtungen bezüglich des Bildausschnitts zugeordnet.

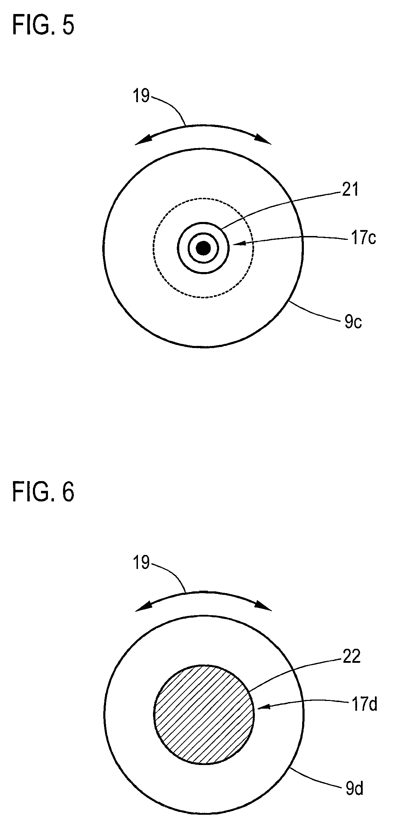

Fig. 5 zeigt eine weitere Ausgestaltung eines Dreh-Drück-Stellers 9c, bei der als Einstellelement 17c ein Trackball 21 im Zentrum des Dreh-Drück-Stellers 9c integriert ist. Dieser lässt sich bekanntlich in verschiedene Richtungen drehen, die dann entsprechend auf Richtungen im Bild der Außenkamera 4 abgebildet werden, so dass der Bildausschnitt verschoben werden kann.

Schließlich zeigt Fig. 6 eine Ausgestaltung eines Dreh-Drück-Stellers 9d, welcher zentral mit einem Touchpad 22 als Einstellelement 17d versehen ist. Bewegungen eines Fingers des Fahrers über das Touchpad 22 werden detektiert und entsprechend einer Richtung zugeordnet, die einer Richtung zur Verschiebung des Bildausschnitts zugeordnet ist, so dass sich auch über das Touchpad 22 eine Einstellung der Lage des Bildausschnitts realisieren lässt.

Diese Ausführungen gelten selbstverständlich alle analog für den Fall, dass eine Verschwenkung der Außenkamera 4 vorgesehen ist.

## Patentansprüche

1. Kraftfahrzeug (1), umfassend wenigstens einen elektronischen Rückspiegel (2), welcher als Außen- und/oder Seitenspiegel ausgebildet ist, der eine Anzeigevorrichtung (3), insbesondere ein Display, für von einer insbesondere außerhalb des Kraftfahrzeugs (1) vorgesehenen Außenkamera (4) aufgenommene Bilder aufweist,
**dadurch gekennzeichnet,**
**dass** als Bedienelement zur Einstellung eines auf der Anzeigevorrichtung (3) anzuzeigenden Bildausschnitts des Bildes und/oder einer Ausrichtung der Außenkamera (4) ein zur Verstellung einer Spiegelfläche eines konventionellen Außenspiegels entwickeltes Spiegelbedienelement (6) und/oder ein Dreh-Drück-Steller (9, 9a, 9b, 9c, 9d) einer Mensch-Maschine-Schnittstelle (7) vorgesehen ist.

2. Kraftfahrzeug nach Anspruch 1, **dadurch gekennzeichnet, dass** bei zwei Außen- und/oder Seitenspiegeln jedem ein Spiegelbedienelement (6) zugeordnet ist oder ein Spiegelbedienelement (6) für beide Außen- und/oder Seitenspiegel vorgesehen ist, wobei insbesondere durch Drehen des Spiegelbedienelements (6) in eine einem Außen- und/oder Seitenspiegel zuordnete Rastposition (10, 16) ein Außen- und/oder Seitenspiegel wählbar ist.

3. Kraftfahrzeug nach Anspruch 1 oder 2, **dadurch gekennzeichnet, dass** das Spiegelbedienelement (6) zwei insbesondere zueinander senkrechte lineare Bewegungsfreiheitsgrade aufweist, die einer Verkippung der Außenkamera (4) und/oder einer Verschiebung des Bildausschnitts jeweils in einer entsprechenden Richtung zugeordnet sind.

4. Kraftfahrzeug nach einem der vorangehenden Ansprüche, **dadurch gekennzeichnet, dass** der Dreh-Drück-Steller (9, 9a, 9b, 9c) ein in wenigstens zwei Bewegungsrichtungen bewegbares, insbesondere zentral auf dem Dreh-Drück-Steller (9, 9a, 9b, 9c) angeordnetes Einstellelement (17, 17a, 17b, 17c) aufweist, dessen Bewegungsrichtungen wenigstens einer entsprechenden Richtung zur Verkippung der Außenkamera (4) und/oder Verschiebung des Bildausschnitts zugeordnet sind.

5. Kraftfahrzeug nach Anspruch 4, **dadurch gekennzeichnet, dass** das Einstellelement (17, 17a, 17b, 17c) als Joystick (18) oder bewegbarer Knopf (20) oder Trackball (21) ausgebildet ist.

6. Kraftfahrzeug nach einem der Ansprüche 1 bis 3, **dadurch gekennzeichnet, dass** auf dem Dreh-Drück-Steller (9, 9d) als weiteres Einstellelement (17, 17d) ein Touchpad (22) vorgesehen ist, wobei eine sensierte Bewegungsrichtung auf dem Touchpad (22) wenigstens einer entsprechenden Richtung zur Verkippung der Außenkamera (4) und/oder Verschiebung des Bildausschnitts zugeordnet sind.

7. Kraftfahrzeug nach einem der vorangehenden Ansprüche, **dadurch gekennzeichnet, dass** durch Drehen des Dreh-Drück-Stellers (9, 9a, 9b, 9c, 9d) eine Vergrößerungsstufe der Außenkamera (4) und/oder des Bildausschnitts wählbar ist.

8. Kraftfahrzeug nach einem der vorangehenden Ansprüche, **dadurch gekennzeichnet, dass** über die Mensch-Maschine-Schnittstelle (7), insbesondere mittels des Dreh-Drück-Stellers (9, 9a, 9b, 9c, 9d), einer von mehreren elektronischen Rückspiegeln (2) auswählbar ist.

## Claims

1. Motor vehicle (1) comprising at least one electronic rear-view mirror (2) which is designed as an exterior rear-view mirror and/or wing mirror which has a display device (3), in particular a visual display, for images taken by an exterior camera (4) which in particular is provided outside the motor vehicle (1), **characterised in that** a mirror operator control element (6) developed for adjusting a mirror face of a conventional exterior rear-view mirror and/or a rotary-push actuator (9, 9a, 9b, 9c, 9d) of a human machine interface (7) is provided as control element for setting an image detail of the image to be displayed on the display device (3) and/or an alignment of the exterior camera (4).

2. Motor vehicle according to Claim 1, **characterised in that** in the case of two exterior rear-view mirrors and/or wing mirrors a mirror operator control element (6) is assigned to each one or a mirror operator control element (6) is provided for both exterior rear-view mirrors and/or wing mirrors, wherein an exterior rear-view mirror and/or wing mirror can be selected by rotating the mirror operator control element (6) into a lock-in position (10, 16) assigned to an exterior rear-view mirror and/or wing mirror.

3. Motor vehicle according to Claim 1 or 2, **characterised in that** the mirror operator control element (6) has two linear degrees of freedom of movement which in particular are perpendicular to one another and which are associated with a tilting of the exterior camera (4) and/or a displacement of the image detail in each case in a corresponding direction.

4. Motor vehicle according to any one of the preceding claims, **characterised in that** the rotary-push actuator (9, 9a, 9b, 9c) has a setting element (17, 17a, 17b, 17c) which can be moved in at least two directions of movement, is in particular arranged centrally on the rotary-push actuator (9, 9a, 9b, 9c) and whose directions of movement are at least associated with a corresponding direction for tilting the exterior camera (4) and/or for displacing the image detail.

5. Motor vehicle according to Claim 4, **characterised in that** the setting element (17, 17a, 17b, 17c) is designed as a joystick (18) or a movable button (20) or a track ball (21).

6. Motor vehicle according to any one of Claims 1 to 3, **characterised in that** a touchpad (22) is provided as a further setting element (17, 17d) on the rotary-push actuator (9, 9d), wherein a sensed direction of movement on the touchpad (22) is associated with at least one corresponding direction for tilting the exterior camera (4) and/or for displacing the image detail.

7. Motor vehicle according to any one of the preceding claims, **characterised in that** a zoom level of the exterior camera (4) and/or of the image detail can be selected by rotating the rotary-push actuator (9, 9a, 9b, 9c, 9d).

8. Motor vehicle according to any one of the preceding claims, **characterised in that** one of a plurality of electronic rear-view mirrors (2) can be selected via the human-machine interface (7), in particular by means of the rotary-push actuator (9, 9a, 9b, 9c, 9d).

## Revendications

1. Véhicule automobile (1), comprenant au moins un rétroviseur (2) électronique, qui est réalisé sous la forme d'un rétroviseur extérieur et/ou latéral, qui présente un dispositif d'affichage (3), en particulier un écran, pour des images prises par une caméra extérieure (4) prévue en particulier à l'extérieur du véhicule automobile (1),
**caractérisé en ce que**
sont prévus en tant qu'élément de commande pour régler un cadrage d'image de l'image à afficher sur le dispositif d'affichage (3) et/ou pour une orientation de la caméra extérieure (4), un élément de commande de miroir (6) mis au point afin d'ajuster une surface de miroir d'un rétroviseur extérieur conventionnel et/ou un élément de réglage poussoir rotatif (9, 9a, 9b, 9c, 9d) d'une interface homme-machine (7).

2. Véhicule automobile selon la revendication 1, **caractérisé en ce qu'**en présence de deux miroirs extérieurs et/ou latéraux, un élément de commande de miroir (6) est associé à chacun d'eux ou un élément de commande de miroir (6) est prévu pour les deux miroirs extérieurs et/ou latéraux, dans lequel un miroir extérieur et/ou latéral peut être choisi dans une position d'arrêt (10, 16) associée à un miroir extérieur et/ou latéral en particulier en tournant l'élément de commande de miroir (6).

3. Véhicule automobile selon la revendication 1 ou 2, **caractérisé en ce que** l'élément de commande de miroir (6) présente deux degrés de liberté de mouvement linéaires en particulier perpendiculaires l'un à l'autre, lesquels sont associés à un basculement de la caméra extérieure (4) et/ou à un glissement du cadrage d'image respectivement dans une direction correspondante.

4. Véhicule automobile selon l'une quelconque des revendications précédentes, **caractérisé en ce que** l'élément de réglage poussoir-rotatif (9, 9a, 9b, 9c) présente un élément de réglage (17,17a, 17b, 17c) pouvant être déplacé dans au moins deux directions de déplacement, disposé en particulier de manière centrale sur l'élément de réglage poussoir-rotatif (9, 9a, 9b, 9c), dont les directions de déplacement sont associées au moins à une direction correspondante pour le basculement de la caméra extérieure (4) et/ou pour le glissement du cadrage d'image.

5. Véhicule automobile selon la revendication 4, **caractérisé en ce que** l'élément de réglage (17, 17a, 17b, 17c) est réalisé sous la forme d'une manette (18) ou sous la forme d'un bouton (20) pouvant être déplacé ou d'une boule de commande (21).

6. Véhicule automobile selon l'une quelconque des revendications 1 à 3, **caractérisé en ce qu'**est prévu, sur l'élément de réglage poussoir-rotatif (9, 9d), en tant qu'élément de réglage (17, 17d) supplémentaire, un pavé tactile (22), dans lequel une première direction de déplacement détectée sur le pavé tactile (22) est associée au moins à une direction correspondante pour le basculement de la caméra extérieure (4) et/ou le glissement du cadrage d'image.

7. Véhicule automobile selon l'une quelconque des revendications précédentes, **caractérisé en ce qu'**un niveau d'agrandissement de la caméra extérieure (4) et/ou du cadrage d'image peut être choisi en tournant l'élément de réglage poussoir-rotatif (9, 9a, 9b, 9c, 9d).

8. Véhicule automobile selon l'une quelconque des revendications précédentes, **caractérisé en ce qu'**un des nombreux rétroviseurs (2) électroniques peut être sélectionné par l'intermédiaire de l'interface homme-machine (7), en particulier au moyen de l'élément de réglage poussoir-rotatif (9, 9a, 9b, 9c, 9d).
